# EUROPEAN PATENT APPLICATION

(11) **EP 4 105 614 A1**
(43) Date of publication of application: **21.12.2022**
(21) Application number: 21180260.8
(22) Date of filing: 18.06.2021
(51) Int. Cl.: G01F 23/26

(54) **SENSOR DEVICE FOR DETERMINING A LEVEL OF A FLUID MATERIAL**

(71) Applicant: TE Connectivity Germany GmbH, 64625 Bensheim (DE)
(72) Inventor: Zawadzky, Peter Kurt, 67346 Speyer (DE); Keil, Kevin, 67346 Speyer (DE); Berger, Christian, 67346 Speyer (DE)
(74) Representative: Grünecker Patent- und Rechtsanwälte PartG mbB

(57) **Abstract**

The present invention relates to a sensor device for determining a level of a fluid material along an axis of a container, the sensor device comprising a substrate having a first surface and a second surface, adapted to be placed in the container along the axis such that the first and second surfaces extend along the axis. At least one first electrode placed on the first surface of the substrate. An electrically conductive hollow housing surrounding the substrate, adapted to be capacitively coupled to the first electrode as a counter electrode of the at least one first electrode. The sensor device (100) is operable to determine the level of fluid material based on a capacitance between the at least one first electrode and the electrically conductive housing.

## Description

The present invention relates to a device for determining a level of a fluid material along an axis of a container, further relates to a method of manufacturing the sensor device and to a method for determining a level of a fluid material along an axis of a container.

Devices for determining a level of a fluid material exist. Various level sensors, in particular impedance sensors which evaluate a change in impedance in response to the fluid level, have been developed. Among those are the so-called capacitive level sensors which are based on the fact that any conductor exhibits a finite electrical capacitance. When a probe touches a liquid, the higher dielectric constant and greater surface area of the liquid results in an increased probe capacitance. These capacitance changes can be rather small so that sensitive detection devices are required.

Problems for accurate level measurement are external electrical interference, changing temperatures or changes in the filling media. For example, the chemical composition, the temperature of the filling media or its water content cause different dielectric properties at the same fill level, which then lead to measurement errors and misinterpretations. The measurement errors of these known systems are relatively high.

Capacitive level sensors detect the presence or lack of material in the vicinity of the plates by measuring the capacitance between the plates, which is proportional to the dielectric constant of the material filling the space between the plates. The accuracy of conventional capacitive sensors is based in large part on the dielectric constant of the material to be sensed. For example, when sensing capacitance, a fifty percent change in relative permittivity (dielectric constant) may cause a corresponding fifty percent change in the measured capacitance. Designing and producing capacitive sensors is therefore hampered by the sensitivity of conventional capacitive sensors to changes in the dielectric constant of the material to be sensed.

As an example, one application for a conventional capacitive sensor is a gasoline fuel gauge, which usually incorporates a sensor having a pair of parallel conductors that extend vertically into the fuel tank. As the fuel level rises, the capacitance measured across the two conductors increases because the dielectric constant of the fuel is higher than the air that it replaces. One problem that can arise in this application is when a small amount of a material such as water exists in the fuel tank together with the fuel. As the dielectric constant of water is significantly higher than that of gasoline, even a small amount of water near the sensor can cause the capacitance to rise to a level corresponding to a full tank. A further field of application is the sensing of the level of oil in a vehicle.

Consequently, there is a need for a sensor device capable of accurately measuring a level of a variety of fluids or materials, being robust, having a long life time, easy to manufacture and be capable of manufacture at a relatively low cost. There also exists a need for a method of determining a level of a fluid material, for instance oil, in a container which provides accurate and reliable measurement of the level of fluid, regardless of the composition of the fluid and of the presence of deposits such as oil sump. There is also a need for a sensor that avoids leakage problems in fluid applications. Especially oil is a very aggresse material, which causes material creep which accelerate aging of electronic component and their soldering points.

There is a need for a sensor device capable of accurately determining a level of a fluid material in a container solving problems of errors due to deposits, oil sump on the bottom of the oil pan and the aging of the oil.

A false fluid level indication in a container may be caused by adhering deposits which may interfere the electrical field within a measurement capacitor. Also, capacitive sensors use a reference for self-calibration while in an oil tank the reference measurement may be influenced by the oil sump. Aging of the oil may affect the physical parameters of the oil leading in a measurement drift. Further, to determine the fluid level in non-stationary tanks e.g. dynamic automotive fuel tanks, errors introduced when determining the fluid level in the presence of dynamic motion of the liquid must be avoided. For the capacitive sensing solution some of the main problems are deposits that adhere on the electrodes and the oil sump on the bottom of the oil pan. In an oil tank reference measurement may be influenced by the oil sump thus the measurement results within the oil sump are different than in the rest of the fluid.

This object is solved by the subject matter of the independent claims. Advantageous embodiments of the present invention are the subject matter of the dependent claims.

The invention is based on the idea that by using a capacitive fluid level sensor comprising a double-sided and decentered arrangement of the sensor electrodes (double sided decentered segmentation of the sensor electrodes) -in other words comprising electrodes arranged on two surfaces of a printed circuit board (PCB) such that gaps between electrodes on one side of the PCB do not overlap with gaps between electrodes on the other side of the PCB - it is possible to measure real 100% of the fluid level in multiple conditions with no gaps i.e. no dead zone. It also makes possible to eliminate inaccuracy due to deposits adhering on the electrodes and to avoid wrong measurement caused by the oil sump. Using one or multiple of the electrode segments allows to obtain more than one measurement curves for a same level of fluid. It enhances precision and it may be used for diagnosis function.

Accurate measurement of a level of fluid material in a container is important in a wide range of industrial, clinical and laboratory processes. The device of the present invention may be used for determining the level of oil in an oil tank, transportation (road vehicle, off-road vehicle, AUTO, ICT), stationary stations (e.g. industry equipment) or appliances (e.g. heating systems...) and oil level sensing applications within a harsh environment. The sensor device can also be used in industrial or appliances applications.

In particular, the present invention provides a sensor device for determining a level of a fluid material along an axis of a container, the sensor device comprising a substrate having a first surface and a second surface, adapted to be placed in the container along the axis such that the first and second surfaces extend along the axis. At least one first electrode placed on the first surface of the substrate. An electrically conductive hollow housing surrounding the substrate, adapted to be capacitively coupled to the first electrode as a counter electrode (104) of the at least one first electrode. The sensor device is operable to determine the level of fluid material based on a capacitance between the at least one first electrode and the electrically conductive housing. An advantage deriving from this solution is that it allows for level-measurement in dynamic surroundings e.g. in a driven vehicle such as a truck. The electrically conductive housing comprises an inner surface (inner wall) where charge resides. Different shapes of the housing may be advantageous for measuring the capacitance in different applications.

The measurement of the level of fluid in the container is carried out inside the electrically conductive housing within a shielded environment which allows avoiding measurement errors related to dynamic motion of the fluid. This also results in shielding against incoming external influences from the outside environment. The solution is especially advantageous in the case of large containers for example tanks of a truck in motion. Any kind of packaging and sealing can be used. Another advantage is that the substrate (PCB) with the electrodes on its surface can be easily inserted into the electrically conductive housing (e.g. tube), each of the electrodes can be charged with any potential and the electrically conductive housing can be charged with a counter potential to function as a common counter electrode. The first and second surfaces of the substrate may also be referred as top layer and bottom layer of the substrate i.e. of the PCB. The container and the substrate may be referred as having a rear end and a front end along the axis.

Advantageously, the electrodes' layout on a layer (surface) of the substrate facilitates shielding the electrodes and other substrate's layers from each other and against incoming external influences from the outside environment. This reduces parasitic capacitances within the sensor.

Another advantage is that the assembly is suitable for enhanced performance platforming. The sensor device comprises modules such that derivative products for different applications are possible. In other words, modules of the sensor are scalable.

Another advantage is that the conductive hollow housing can be designed in an ergonomically efficient manner to facilitate use in different types of containers.

Advantageously, the gap between the electrically conductive housing and the substrate may be big enough to minimize memory residual effect i.e. to avoid adhesion of fluid material to the electrically conductive container.

Along the description the term capacitance should be understood as referring to capacitance or to impedance. In AC (alternating current) impedances are measured thus the term capacitance should be understood as impedance. In in DC (direct current) capacitances are measured, thus the term capacitance should be understood as capacitance.

Preferably the substrate comprises a metallization layer. This allows for a plurality of first electrodes -and second electrodes- to be formed by one layer of metallization being segmented by removing parts of the metallization layer, thereby forming gaps.

According to an advantageous embodiment of the present invention the substrate is a circuit carrier or a printed circuit board, PCB. Advantageously, this provides an established cost efficient and accurate fabrication method.

According to an advantageous embodiment of the present invention, the hollow electrically conductive housing comprises a conductive tube, a pipe or an electrically insulating body with an electrically conductive coating. Preferably, the electrically conductive hollow housing is a tube of cylindrical shape. Advantageously, a cylindrical housing facilitates determining the capacitance by evaluating a voltage difference between a fixed voltage on the hollow electrically conducive housing (tube) and a varying voltage on the electrodes which depends on the level and time i.e. between the electrically conductive housing and the electrically conductive first electrodes arranged on the first surface of the substrate. The charge resides on the outer surface of the electrodes arranged on the substrate and the inner wall of the cylindrical electrically conductive housing. Different shapes of the housing may be advantageous for measuring the capacitance in different applications.

Preferably the electrically conductive hollow housing is made of a corrosion free conductive material. For example, the electrically conductive hollow housing may be a stainless steel tube or a brass tube.

According to an advantageous embodiment of the present invention, at least one second electrode is arranged on the second surface of the substrate at least partially overlapping along the axis with at least one of the at least one first electrode, wherein the sensor device is operable to determine the level of fluid material based on a capacitance between the at least one second electrode and the electrically conductive housing. This solution is advantageous in that it allows obtaining more than one capacitance curves for an overlapping region between at least one first electrode and at least one second electrode. Thus, allowing redundant measurement of capacitance and avoiding errors in the results. This also allows for precision and accuracy enhancement. Capacitance of a first electrode refers to capacitance between a first electrode and the housing. Capacitance of a second electrode refers to capacitance between a second electrode and the housing.

Due to at least one second electrode being arranged on the second surface of the substrate at least partially overlapping along the axis with at least one of the at least one first electrode, information about a capacitance between the at least one first electrode and the electrically conductive housing and information of a capacitance between the at least one second electrode and the electrically conductive housing in the overlapping region can be analyzed and compared. For example, two capacitance curves (yielded by a redundant capacitance measurement) in the overlapping part of first and second electrodes can be used to infer whether there are variations in the overlapping environment of the first and second electrodes. For example, the redundant capacitance measurement can be used to detect the presence of materials at different positions along the axis which may vary the physical properties of the fluid such as relative permittivity (comprising several dielectric constants) and/or impedance of the fluid material at those positions thus modifying the capacitance between electrodes at those positions of the axis and the electrically conductive housing.

Advantageously, capacitance measurement curves of first and second electrodes (measurement curves of electrodes placed on the first and second surface), in other words top-curve (Ctop) and bottom-curve (Cbottom) respectively, can be used independently from each other to refine the total measurement result. The first surface may also be referred to as top surface and the second surface may also be referred to as bottom surface. These measurement curves can also be summed up i.e. Ctotal = Ctop + Cbottom thus resulting in higher sensitivity. This improves precision and accuracy of the results. Measurement curve means the results (curve) obtained from measuring capacitance between a first electrode and the housing or between a second electrode and the housing.

The capacitance of each of the first and second electrodes may vary in accordance both with the extent of the electrodes' immersion in the fluid material and the physical properties of the fluid such as relative permittivity and/or impedance. Given that at least one second electrode at least partially overlaps along the axis with at least one first electrode, the capacitance determined by evaluating a voltage difference between a fixed voltage on the housing and a varying voltage on that second electrode can be compared to the capacitance determined by evaluating a voltage difference between the fixed voltage on the housing (common counter-electrode) and a varying voltage on that first electrode i.e. the capacitances in the overlapping region can be compared to detect whether they show a different behavior indicating the presence of a material such as a deposit or oil sump.

Advantageously, the double-sided substrate with overlapping of the first and second electrodes arranged on the two sides of the substrate allows to build up a plurality of capacitors between the electrodes and the housing (tube) overlapping along the axis.

Advantageously one or more first and/or second electrodes can be used for reference measurement, which avoids offset or capacitance drifts due to the oil sump in the bottom of the oil pan. This solution facilitates detecting errors caused by deposits adhering on the electrodes by single electrode selection and comparison of the capacitances. It improves the reference and level measurement by using one or more first and/or second electrodes or in other words electrode segments.

First and/or second electrodes can be switched segment by segment from front end to rear end provided that there is no zone on the substrate along the axis uncovered by electrodes. Any number of electrodes for example two or three of them can be switched depending on the estimated level. First and second electrodes may also be switched from bottom surface to top surface.

Another advantage is that reference capacitance may not be in the oil sump i.e. any electrode (along the axis) can be used for measuring reference capacitance.

Advantageously measurement results of the bottom electrode (which may be a reference electrode) within the oil sump and the other electrodes (which are not in the oil sump) can be compared and can be used for oil quality indication.

Advantageously this solution is suitable for platforming. Frontend design (diameter and length) can be easily adopted to each specific customer application. Measurement system, electronics and mechanics remain the same. It is further possible to provide fluid quality measurements, which is a benefit on top of the level and temperature measurement.

According to an advantageous embodiment of the present invention, the first and second electrodes have a trapezoid(al) shape having two parallel sides wherein the other two sides are also parallel (forming a rectangular electrode) or not parallel (slanted segments).

According to an advantageous embodiment of the present invention, the sensor device comprises a plurality of first electrodes arranged on the first surface each of which is separated from adjacent ones by a gap, and a plurality of second electrodes arranged on the second surface each of which is separated from the adjacent ones by a gap, wherein a gap on the first surface does not overlap with a gap on the second surface such that all positions of the substrate along the axis are covered by a first electrode and/or by a second electrode, and wherein the sensor device is operable to further determine the level of fluid material based on a capacitance between one or more of the plurality of first electrodes and the electrically conductive housing and/or a capacitance between one or more of the plurality of second electrodes and the electrically conductive housing. Position of the substrate refer to location or point of the substrate along the axis.

The first and second electrodes being arranged such that a gap on the first surface does not overlap with a gap on the second surface means that gaps separating adjacent first electrodes on the first surface oppose metallization of the other second surface and gaps separating adjacent second electrodes on the second surface oppose metallization of the first surface. As a result there is no zones along the axis which are no exposed to metallization or in other words not being exposed to a first electrode or to a second electrode

Advantageously a continuous level measurement is possible thanks to the first and second electrodes being placed on the first and second surfaces such that there is no location of the substrate along the axis being uncovered by a first and/or by a second. In other words, thanks to gaps between first electrodes on the first surface not overlapping with gaps between second electrodes on the second surface, the invention allows to measure the level of fluid material at any position of the axis with no gaps (no dead zone).

Any of the first and/or second electrodes can be used for reference and/or level measurement or, any number of them (e.g. two or three of them) can be used for reference and level measurement i.e. any combination of first and second electrodes, depending on the oil level, can be used for reference and level measurement.

Advantageously the solution allows diagnosis features by using an electrode for shield purposes. Some of the first and second electrodes may be used to measure, other electrodes may be used for shielding instead of for measuring.

Preferably all the first and second electrodes may be set to the same potential. Potential refers to electric potential from the housing (common counter electrode) to the electrodes.

Advantageously it allows a single and multi-use of electrodes to close gaps of precision and temperature independency. It allows to avoid wrong measurement caused by deposits and the oil sump i.e. the solution can be used to check if the electrodes have deposits adhering or not. This flexibility can be used for quality indication.

As mentioned above, the setup according to the present disclosure allows obtaining one or multiple measurement curves, which can be used for precision enhancement or for diagnosis function. Also with this setup different diagnosis functions can be implemented. One or multiple measurement curves can also be used for level measurement with ctotal=ctop+cbottom.

Advantageously, capacitance measurement curves of first and second electrodes (measurement curves of electrodes placed on the first and second surface), in other words top-curve (Ctop) and bottom-curve (Cbottom), can be used independently from each other to refine the total measurement result. These measurement curves can also be summed up i.e. Ctotal = Ctop + Cbottom thus resulting in higher sensitivity. This improves precision and accuracy of the results. Measurement curve means the results (curve) obtained from measuring capacitance between a first electrode and the housing or between a second electrode and the housing.

Preferably, using Ctop + Cbottom allows to reduce the measurement errors.

Single and multiuse of electrodes of segmentation allows switching of electrodes along the axis. This allows measuring in conditions of moving oil e.g. while driving.

According to an advantageous embodiment of the present invention the plurality of first and second electrodes are formed by one layer of metallization being segmented by removing parts of the metallization layer, thereby forming gaps. This provides an easy, fast and precise fabrication.

According to an advantageous embodiment each of the electrodes are connected separately as one electrode of the capacitance, the electrically conductive hollow housing being the counter electrode. Advantageously this allows single-use of the electrodes or multi-use of the electrodes. This solution provides a flexible evaluation by means of control unit. Connected separately may be by connected pad.

According to an advantageous embodiment at least one of the plurality of first and second electrodes on each side of the substrate are used as reference capacitance.

Preferably at least one electrode on the first surface and an identical electrode on the second surface are arranged opposing each other and are used as reference capacitances.

This solution is advantageous in that measuring capacitance between an electrode arranged on one surface of the substrate and the conductive housing and a capacitance between an identical electrode arranged on the second surface, allows to obtain redundant measurement curves for reference capacitance which allows for a more accurate calibration of the sensor.

As an example, redundant reference electrodes may be two identical electrodes placed on the first and second surfaces at the rear end of the substrate providing a redundant estimate of the physical properties e.g. relative permittivity and/or of the fluid or material contained within the container. In the absence of other materials such as deposits or oil sump that may vary the relative permittivity and/or impedance of the fluid material, the total capacitance on the top surface (total capacitance of the first electrodes) and total capacitance on bottom surface (total capacitance of second electrodes) should be the same relative to the size of the geometry. By comparing both capacitance curves (top and bottom curves) it can be inferred whether there is materials varying the relative permittivity and/impedance of the fluid material such as deposits or oil sump. Analogously two identical electrodes can be used to obtain redundant information of reference capacitance of air. Thus, this solution avoids calibration errors.

Regarding capacitance measured in single electrodes, as the electrodes are mirrored (the electrodes on the backside of the PCB), their defined values and expected value in target media are known. Thus, deviations can be tracked (dependent on geometry).

As an example, a first electrode placed on the first surface at a different position along the axis may be used to determine a variation in capacitance between the electrode and the housing from one or more calibrated initial values to a value that is dependent on the level of and on the physical characteristics of the fluid material such as relative permittivity (comprising several dielectric constant and/or impedance of the fluid material contained within container as determined from the capacitances between the lower electrodes and the electrically conductive tube. A second electrode placed on the second surface at least partially overlapping along the axis with the first electrode may also be used to obtain information regarding the physical characteristics of the fluid material in the overlapping region i.e. information regarding the presence of deposits or oil sump.

Advantageously the sensor device can be flipped (inverted) in relation to the front end and rear end of the substrate (in other words rotated relative to an axis of rotation which is perpendicular to the axis of substrate). All of the electrodes can be used for reference and level measurement, depending on the oil level. The sensor can also be flipped in relation to top and bottom surfaces.

Advantageously, by using different combinations of electrodes on the first and second surfaces for reference measurement, false capacitance measurement results e.g. offset or capacitance drifts due to the oil sump in the bottom of the oil pan can be avoided and errors caused by deposits adhering on the electrodes can be avoided.

Advantageously measurement results of for example an electrode closest to the rear end which may be within the oil sump and the other electrodes (which are not in the oil sump) can be compared and can be used for oil quality indication.

Preferably the reference electrodes may include an electrode placed on the rear end of the substrate adapted to be immersed within the fluid or material. Preferably redundant measurement is obtained by using a another electrode placed on the other surface also the rear end of the substrate. One or two electrodes placed at the front end of the substrate may be used for air reference measurement.

According to an advantageous embodiment the number of first electrodes is different to the number of second electrodes. This provides an example of a segmentation form. In other words, the amount of segments (first and second electrodes) may not be the same on top and bottom layers (first and second surfaces of the substrate).

According to an example, a first electrode placed on the central part of the first surface overlaps with three second electrodes placed on the central part of the second surface. This is an example providing the technical advantages previously described i.e. there is no dead zone (no gap). In other words, any kind of layout (design) is possible i.e. there is no fix scheme to arrange the electrodes provided that there is no gap (dead zone). Further, depending on the size of the overlap (in area i.e. surface or %) a redundancy of the level measurement is obtained.

According to an example of the present invention, a first electrode placed on the central part of the first surface does not overlap with a second electrode placed on the central part of the second surface. This is another example providing the technical advantages previously described i.e. there is no dead zone (no gap).

According to an advantageous embodiment the number of first and second electrodes is the same, the first and second electrodes are of about the same size and the first and second electrodes are arranged slightly shifted along the axis. This is another example of layout providing the technical advantages described above.

According to an advantageous embodiment there are three electrodes on the first surface and five second electrodes on the second surface. This is another example of layout providing the technical advantages previously described.

According to an advantageous embodiment there are three first electrodes on the first surface and three second electrodes on the second surface. This is another example of layout providing a the technical advantages previously described.

According to an advantageous embodiment the plurality of capacitances are interconnected and evaluated in different methods. It is clear for a person skilled in the art how to measure the capacitances or impedances.

According to an advantageous embodiment the substrate is a layered substrate comprising one or more functional layers. Advantageously a functional layer may comprise the first electrodes or the second electrodes (surface with the first or second electrodes). A functional layer may be a shielding layer placed below the layer comprising the first electrodes or below the layer comprising the second electrodes i.e. the functional layer may be a shielding layer whose capacitance value can be read (parasitic capacitance) and used to cancel out parasitic capacitances within the measurement results. The functional layers may be (U-) shielding layers to protect traces and the substrate from external fields incoming on the side. The functional layers are additional layers. The functional layers can be electrical shielding layers.

Preferably two of the functional layers are used for electrically shielding the first and second electrodes. This provides the possibility to shield the substrate (sensor) layers from each other and against incoming external influences from the outside environment. The electrode layout on each layer reduces parasitic capacitances.

Preferably the number of functional layers used depend on the desired number of additional functions (e.g. electrical shielding).

According to an advantageous embodiment some of the functional layers are used for shielding traces (leads inside the PCB). Although leads are rather narrow compared to their length, they still can form parasitic capacitances. The functional layers may shield the parasitic capacitance created by the traces (leads). Electrodes connected through the PCB may also be shielded. Additional components may also be shielded.

The capacitance of the shielding layers (functional layers) may be measured and be used to reduce parasitic capacitances within the PCB and improve accuracy by using their capacitance value in the level calculation. This leads to an enhanced precision and improved overall accuracy. The functional layers may also comprise integrated leads and electronic components.

According to an advantageous embodiment the substrate comprises six functional layers: a first and a sixth layers being a top layer and a bottom layer respectively, the first layer comprising the first surface with the first electrodes and the sixth layer comprising the second surface with the second electrodes; a second and a fifth layers consecutive to the first and sixth layer respectively, which are shielding layers placed below the first and second electrodes respectively; a third and a fourth layer arranged consecutive second and fifth layers respectively which are (U-) shielding layers to protect traces and the substrate from external fields incoming on the side.

Advantageously the hollow housing (tube) shields the whole PCB (substrate). Additional functional layers also shield the PCB. The functional layers may shield the PCB without need of the tube.

The first and sixth layer may be made of the same material and have the same use. The first and sixth layers may be mirrored to each other. They may a different amount of electrodes. The first and sixth layers are used for the same purpose i.e. for electrodes to build up a capacitor between the electrodes and the tube.

Preferably two layers (Layer 2+5) are used for shielding the inside of the sensor. The capacitance of layers 2 and 5 can be measured to improve accuracy by using their capacitance value in the level calculation. This reduces parasitic capacitances within the PCB. It leads to an enhanced precision and improved overall accuracy.

Preferably layers 1+6 i.e. top + bottom layer are used for the same purpose of comprising the first and second electrodes, preferably with small potential barriers. However, small potential barrier may not be needed if big potential barriers can be used for measurement and as potential barrier.

Layer 2+5 may be used for shielding layers below the top-and bottom electrodes. Layer 3+4 may be used for the same purpose such as provide U- Shielding Layers. This allows to protect traces and also PCB from external fields incoming on the side.

According to an advantageous embodiment the electrodes are covered with a protective coating Preferably the protective coating may be a fluid protective coating. This allows the sensor device to determine the level of electrically conductive and electrically non-conductive fluid materials. Another advantage is that it avoids corrosion of the electrodes. The protective coating may be an electrically insulating coating.

The present invention provides a method of manufacturing a sensor device according to any of the preceding embodiments, the method comprising the steps of:
- arranging a substrate having a first surface and a second surface, placing at least one first electrode on the first surface of the substrate and arranging the electrically conductive hollow housing surrounding the substrate,
- interconnecting the at least one first electrode and the housing such that the sensor device is operable to determine the level of fluid material based on a capacitance between the at least one first electrode and the electrically conductive housing.

Advantageously the (electrically conductive) housing is directly connected to the PCB (substrate). The connection may by stitched or welded. The connection may also be by welding, soldering, crimping would be suitable techniques.

According to an advantageous embodiment of the present invention the method of manufacturing a sensor device further comprises the steps of:
placing at least one second electrode on the second surface of the substrate at least partially overlapping along the axis with at least one of the at least one first electrode;
placing a plurality of further first electrodes on the first surface each of which separated from adjacent ones by a gap; and
placing a plurality of further second electrodes on the second surface each of which separated from the adjacent ones by a gap;
wherein a gap on the first surface does not overlap with a gap on the second surface such that all positions of the substrate along the axis are covered by a first electrode and/or by a second electrode,
wherein the sensor device is operable to determine the level of fluid material based on a capacitance between one or more of the plurality of first electrodes (106, 108, 112, 114, 116) and the electrically conductive housing and a capacitance between one or more of the plurality of second electrodes (118, 120, 122, 124, 126) and the electrically conductive housing.

According to an advantageous embodiment of the present invention the method of manufacturing comprises the step of arranging at least one further functional layer on the substrate for determining a capacitance of the one or more functional layers for calibration.

According to an advantageous embodiment of the present invention the method of manufacturing comprises the step of providing at least one spacer (cap) to keep the first and second electrodes arranged on the substrate at a fixed distance from the electrically conductive housing. Advantageously this allows to keep capacitor plates (electrodes) on a fixed distance. It allows capacity to be stable. Further, advantageously the spacers may be used to close the tube on top and bottom. Advantageously the spacers may be used to stabilize the position of the PCB with regard to the housing. Spacers may be of plastic.

According to an advantageous embodiment of the present invention the method of manufacturing comprises the step of providing a connection between the electrically conductive housing (tube) and the PCB (substrate) to charge the first and second electrodes arranged on the substrate. Providing the connection (charging of the PCB) may be by means of welding, soldering (with having slices insides), pressing with hooks i.e. direct plugin. Preferably, the connection includes connection to the electronics.

According to an advantageous embodiment of the present invention the method of manufacturing comprises the step of sealing of the connection (charging connection) between the PCB and the electrically conductive housing (tube) or/and sealing a PCB housing provided for the sensor electronics. Advantageously this solution allows solving leakage problems in fluid applications. Especially, it solves problems deriving from oil being an aggresse material, which causes material creep (Kriechverhalten) and toxic fumes, which accelerate aging of electronic component and their soldering points. This solution avoids that the penetration of the tube through the housing causes leakage. In other words, it provides a seal.

According to an advantageous embodiment of the present invention the method of manufacturing comprises the step of providing to the tube mechanical support from the housing but only the connection for potential charging is needed to be sealed. In other words, grounding does not have to be sealed because the liquid is usually on ground potential

According to an advantageous embodiment of the present invention the method of manufacturing comprises the step of providing the connection between the tube (electrically conductive housing) and the electronics is established by a hard connection (e.g. a clamp) between a track within the PCB or an electrode on top of the PCB and the tube itself e.g. by means of a clamp. In this case, no extra sealing is needed.

According to an advantageous embodiment of the present invention the method of manufacturing comprises the step of sealing the electronic part of the PCB by a potting technique inside the tube and in-between the tube and PCB.

According to an advantageous embodiment of the present invention the method of manufacturing comprises the step of coating the (whole) PCB, the electrically conductive housing (tube) acting as the sealing part against the oil. Preferably, the material for the coating may be any kind of resistant potting material (resistant to the aggressive media). The material for the coating may be for example epoxy or polyimide.

In the manufacturing, the PCB may be cut (milled). The spacers (caps) may be milled or formed by 3D printing.

The present invention provides a method of determining a level of a fluid material in a container using the sensor device according to the embodiments of the invention comprising the steps of:
arranging the sensor device inside the container, so that fluid material inside the container can enter the housing and partly fill a space between the at least one first electrode and the housing;
measuring the capacitance between at least one of the first electrodes and the hollow electrically conductive housing and/or the capacitance between at least one of the second electrodes and the hollow electrically conductive housing which varies according to the level of the fluid material.

Advantageously the method allows for a constant oil flow, to avoid major deposits or collection of deposits within the tube and to clear out air bubbles. For filling the space between the electrode and the housing, additional openings can be provided in the housing, which allow ingress of the fluid.

According to an advantageous embodiment, the method of determining a level of a fluid material further comprises the step of measuring a capacitance value of at least one functional layer for calibration and performing calibration based on the capacitance value. This allows to eliminate parasitic capacitances and so calibrate the measurement capacitance by using the parasitic capacitances of the PCB. Thus enhancing accuracy by reducing influences of capacitance variations.

According to an advantageous embodiment, the method of determining a level of a fluid material further comprises the step of comparing signals from reference capacitance for calibration measurement.

According to an advantageous embodiment the method of determining a level of a fluid material comprises the steps:
∘ Several capacitors are built up between the first and second electrodes on the PCB and the surrounding common shared housing (tube). The amount of capacitors equals the amount of electrodes on the PCB. With varying level of fluid, the capacitance of these capacitors are changing as the mixture of fluid to air is changing. Electrodes might be surrounded by e.g. 100% fluid or mixture fluid/air or 100% air. Each electrode contains a defined capacitance. By having several segmented electrodes extra functions are given. Depending on the surrounding material various diagnosis functions can be established. The capacitance is read out by an electronic part and used for further signal processing.
   ▪ AC voltage (impedance spectroscopy) can be used. Frequency can be changed and depending on the frequency different impedances are measured. An advantage deriving from this solution is that with these different impedances oil quality can be determined (different materials and different fluids e.g. water or dirt within the oil, show different impedance behavior). AC measurement is more robust against external disturbances. Another benefit of the AC measurement is the possibility of the evaluation of phase-shifts between voltage and current. That allows more information about the fluid quality, density etc.
   ▪ DC measurement (e.g. Charge Time Measurement) provides a very low cost measurement. This is only depended of the charging of the electrodes (tube/pcb) and the dielectric in-between. Basically it acts like a plate or cylindric capacitor charged with GND and +5V (for example). Material change of the oil (aging) e.g. quality or density may not be detected as there may be no direct correlation between charge time measurement and quality or density. Also DC measurement is less robust against external influences and disturbances.
   ▪ With a smart IC/ASIC selection both measurement methods can be provided. Both measurement methods could be used to verify each other or it might offer independent redundancy.
∘ Digital post-processing: Measuring more than one electrodes (several) provides an accuracy increase. Signal processing methods may be used to predict and correct measurement results.

For example, the current of every capacitance may be measured. Phase of capacitance may be measured to determine oil quality and/or other possible properties viscosity and density of oil.

Advantageously, solutions are possible with small amount of components. The complete measurement technic can be implemented in an application specific integrated circuit (ASIC).

Advantageously the solution enables automatic process of determining a level of a fluid material in a container, which avoids human errors and provides improved precision and accuracy. The process of determining the level of the fluid material may be completely automatic.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
**FIG. 1** is a schematic perspective view of a sensor according to a first embodiment of the present invention;
**FIG. 2A** is a schematic perspective view of a detail of the sensor device of the present invention;
**FIG. 2B** is a schematic perspective view of a detail of the sensor device of the present invention;
**FIG. 3** shows a perspective view of the device shown Fig. 1;
**FIG. 4** is a schematic detail of the device of the present invention;
**FIG. 5** is a schematic detail of the device of the present invention;
**FIG. 6** is a schematic detail of the device of the present invention;
**FIG. 7A** is a schematic perspective view of a detail according an embodiment of the present invention;
**FIG. 7B** is a schematic perspective view of a detail according an embodiment of the present invention;
**FIG. 8** is a schematic perspective view according to an embodiment of the present invention;
**FIGs. 9A and 9B** show a diagram illustrating a detail of the embodiments of figures 7A and 7B;
**FIG. 10A** is a schematic detail of the device of the present invention;
**FIG. 10B** is a schematic detail of the device of the present invention;
**FIG. 10C** is a schematic detail of the device of the present invention;
**FIG. 11** is a diagram illustrating an example of an output signal of the present invention.
**FIG. 12A** shows a schematic perspective view of an embodiment of the present invention.
**FIG. 12B** shows a schematic perspective view of a detail of the present invention.
**FIG. 12C** shows a schematic perspective view of a detail of the present invention.
**FIG. 13** shows a perspective top view of an embodiment of the present invention.
**FIG. 14** shows a perspective view from inside of the embodiment of Figs. 12A, 12B and 12C.
**FIG. 15** shows a perspective top view of an embodiment of the present invention.
**FIG. 16** shows a perspective view from inside of the embodiment of Fig. 15.

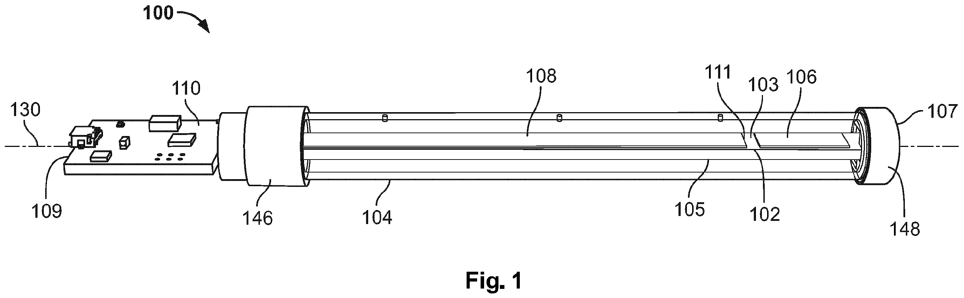

The present invention will now be explained in more detail with reference to the Figures and firstly referring to Fig. 1.

Fig. 1 shows a sensor device 100 for determining a level of a fluid material along an axis 130 of a container. The sensor device 100 comprises a substrate 102 having a first surface 103 and a second surface 105. The sensor device 100 is adapted to be placed in the container along the axis 130 such that the first and second surfaces 103, 105 extend along the axis 130.Two first electrodes 106 and 108 are placed on the first surface 103 of the substrate 102. Figure 1 does not show the second electrodes placed on the second surface. An electrically conductive hollow housing 104 surrounds the substrate 102.

In Fig. 1 the first surface 103 of the substrate may be referred to as top surface and the second surface 105 may be referred to as bottom surface. The terms top and bottom are of course relative terms that are interchangeable.

The sensor device of Fig. 1 shows a front end 109 and a rear end along the axis. The front end 109 is closer to area 110 where the electronics (circuitry) of the sensor is placed. Figure 1 shows a front cap 146 placed close to the electronics area 110 and a rear cap 148 placed close to the rear end.

The substrate may be referred to as printed circuit board, PCB, or a circuit carrier. The hollow electrically conductive housing may be referred as conductive tube, tube, housing or conductive housing.

Figure 1 shows a gap 111 between adjacent first electrodes 106, 108. Although not shown in Figure 1, there are gaps between adjacent second electrodes on the second surface of the substrate.

In Fig. 1 the electrically conductive hollow housing 104 appears transparent to allow visualizing the details inside the housing. However, the electrically conductive hollow housing usually comprises an opaque material such as a metal. The electrically conductive hollow housing 104 is adapted to be capacitively coupled to the first electrodes 106, 108 as a counter electrode 104 of the first electrodes 106, 108. The electrically conductive hollow housing 104 is adapted to be capacitively coupled to the second electrodes (not shown in Fig. 1) as a counter electrode 104 of the second electrodes. In other words, the housing is a common counter electrode for the first and second electrodes.

The hollow electrically conductive housing may be a conductive tube, a pipe or an electrically insulating body with an electrically conductive coating.

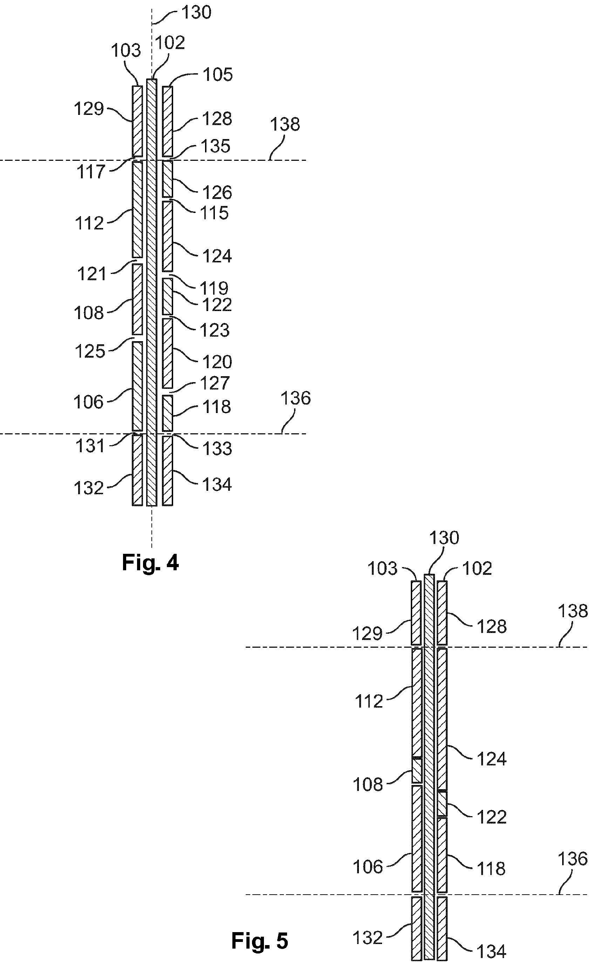

The sensor device comprises a plurality of first electrodes arranged on the first surface each of which is separated from adjacent ones by a gap, and a plurality of second electrodes (not shown in Fig. 1) arranged on the second surface each of which is separated from the adjacent ones by a gap. A gap on the first surface does not overlap with a gap on the second surface such that all positions of the substrate along the axis are covered by a first electrode and/or by a second electrode. Position of the substrate refers to a location or point of the substrate along the axis. The first and second electrodes being arranged such that a gap on the first surface does not overlap with a gap on the second surface means that gaps separating adjacent first electrodes on the first surface oppose metallization of the other second surface and gaps separating adjacent second electrodes on the second surface oppose metallization of the first surface. As a result, there is no zones along the axis which are no exposed to metallization or in other words not being exposed to a first electrode or to a second electrode as shown in Fig. 4, Fig. 5 and Fig. 6.

Each of the electrodes is connected separately as one electrode of the capacitance, the electrically conductive hollow housing being the counter electrode.

By comparing a capacitance between a first electrode and the housing (electrically conductive hollow housing) and a capacitance between a second electrode and the housing in the overlapping region, for example by comparing the impedance curve (or voltage curve, if its DC) in the overlapping region it can be inferred whether there is a material varying the physical properties of the fluid material of the container e. g. whether there is a deposit or an oil sump for the example of an oil level sensor. Detection of deposits is possible thanks to comparison of the electrodes curves to each other, using their geometry as reference. Geometry defines a certain value (reference) which is known from the geometry design.

In other words, the sensor device allows to generate a measurement curve for top layer electrodes and a measurement curve for bottom layer electrodes. These two curves can be compared with each other. This redundant measurement allows to infer whether there is a deposit, in other words a material varying the physical properties of the fluid. For example, when only the fluid material whose level is to be measured is present, the capacitance curve measured between a first electrode and the housing and the capacitance curve measured between a second electrode and the housing should both have the same impedance curve (or voltage curve, if its DC) as the fluid level increases. If there is a deposit in one of that first electrode or second electrode, the capacitance curve between that electrode and the housing is different from the case of no deposit being present. Thus, comparing the redundant capacitance curves along the axis provides information about the existence of deposits. If, for example, the first and second electrodes have different sizes, to detect the presence of a deposit, the difference in capacitance due to the difference in sizes (area) of the electrodes both in the part of the electrodes covered by fluid and the part uncovered by fluid (i.e. part where there is air between the electrodes and the tube) has to be taken into account.

The sensor device is operable to determine the level of fluid material based on a capacitance between one or more of the plurality of first electrodes and the electrically conductive housing 104 and/or a capacitance between one or more of the plurality of second electrodes and the electrically conductive housing 104.

The fluid material may be for instance oil but may also be any other liquid. In case of electrically conductive liquids, the surface of the electrodes on the substrate 102 has to be sealed with an electrically insulating protective layer.

According to an example of the sensor device the substrate 102 is formed by a PCB and is inserted into the electrically conductive hollow housing (conductive tube). First and second electrodes placed on the first and second surfaces of the substrate are charged with a potential.

In operation, the electrically conductive housing 104 is charged with a counter potential (e.g. ground). Capacitors are established between each of the first and second electrodes and the electrically conductive housing, in other words, a capacitance between each of the first electrodes and the electrically conductive housing and a capacitance between each of the second electrodes and the electrically conductive housing is established. Thus, the capacitances are measured inside the electrically conductive housing, between the substrate and electrically conductive housing i.e. within a shielded environment. Any kind of packaging and sealing can be used. This results in shielding against incoming external influences from the outside environment, such as in a case of large containers in motion for example in a truck in motion. Thus, the electrically conductive hollow housing allows to determine the fluid level in non-stationary tanks e.g. dynamic automotive fuel tanks avoiding errors introduced when determining the fluid level in the presence of dynamic motion of the liquid.

The capacitance between each of the electrodes and the housing varies depending on the extent of the electrode's immersion in the fluid and on the physical properties such as relative permittivity (consisting of several dielectric constants) and/or impedance of the fluid (or material). The relative permittivity may also be referred as dielectric constant.

As an example for understanding the invention, in operation, when the substrate is immersed in the fluid, measuring a capacitance between one of the first electrodes e.g. electrode 106 and the housing 104 may provide an estimate of the relative permittivity and/or impedance of the fluid. A capacitance between another first electrode e.g. electrode 108 and the housing which varies from a calibrated initial value to a value that is dependent on the level of fluid and on the physical properties of the fluid (as determined from the capacitance of electrode 106 referred before may be used to determine the level of fluid in the container. A capacitance between another first electrode for example placed closer to the front end, may provide an estimate of a reference of the capacitance in air which can be used to compensate the calculation of the fluid level. This can also be done using any one of the first electrodes or any other number of first and/or second electrodes instead of three different electrodes.

The capacitance measurements of the first electrodes and/or the second electrodes may be used together. A specific selection of first electrodes may be dynamically selected for the calculation of the fluid level.

In all the figures each of the electrodes can be connected separately as one electrode of the capacitance.

Different combinations of capacitance measurement curves of first and second electrodes may be compared. For example, one capacitance measurement curve of a first electrode (electrode on the first surface also referred as top layer) can be compared to one capacitance measurement curve of a second electrode (electrode on second surface also referred as bottom layer). For example, two or more capacitance measurement curves from first electrodes (from the top layer) may be compared. For example, two or more capacitance measurement curves of first electrodes may be compared to one or more capacitance measurement curves of second electrodes. In other words, any combination of capacitance measurement curves can be compared.

In other words, the present invention allows multi-use of several electrodes (segments). For example, capacitance measurement curves, Ccurve, of first electrodes (top layer segments) such as Ccurve of electrode 106, Ccurve of electrode 108 and Ccurve of electrode 112 (not shown in Fig. 1) may be used. The same applies to capacitance measurement curves of second electrodes (bottom layer segments). The amount of capacitance curves that can be used is any combination of the capacitance curves of the first electrodes and/or second electrodes.

Further, the capacitance measurement curves Ccurves may be summed up, for example capacitance measurement curves of the top layer (of all first electrodes placed on the first surface) may be summed up to provide CcurveSumtop and the capacitance measurement curves of the bottom layer (of second electrodes placed on the second surface) may be summed up to provide CcurveSumBottom. For example CcurveSumTop may be equal to Ccurve106 (Ccurve of electrode 106) + Ccurve 108 (Ccurve of electrode 108) + Ccurve 112 (Ccurve of electrode 112). For bottom layer, CcurveSumBottom may be equal to Ccurve118 + Ccurve 120 + Ccurve 122+ Ccurve 124 + Ccurve 126 (electrodes 118, 120, 122, 124 and 126 are shown in Fig. 4). In this case there are two sums of capacitance curves corresponding to the top and bottom layers respectively i.e. CcurveSumTop and CcurveSumBottom. CcurveSumTop and CcurveSumBottom can also be summed up in one curve CcurveTotal = CcurveSumTop + CcurveSumBottom.

The reference capacitance and capacitance level measurement may be done using one or more first and/or one or more second electrodes. First and second electrode segments can be switched from bottom to top and from rear end to front end. All the first and second electrodes can be used for reference and level measurement, depending on the oil level.

Capacitance measurement results of one of the electrodes, for example one placed within an oil sump, may be used to detect if there is an oil sump. If there is an oil sump, any other electrode fully immersed into fluid may be used as reference. Thus, same (homogenous) fluid within the container is used for reference and level measurement. If an oil sump is too heavy the value may not be of interest. A reference electrode may be used for calibration, not only for oil sump detection. Any of the electrodes can be used for reference. For example, results of an electrode which is defined as reference electrode may be used for level calibration and for oil sump indication. There may be another electrode, which is defined for oil sump reference measurement.

Capacitance measurement results of the bottom electrode which may be placed within an oil sump may be used as reference capacitance for the oil sump and the measurement results of other electrodes which are not in the oil sump can be compared and can be used for fluid quality indication.

A method to determining a level of fluid material using the sensor device (100) shown in figure 1 may be the following:
∘ Several capacitors are built up between the first electrodes and the surrounding common shared tube. Amount of capacitors is equal to the amount of electrodes on the PCB. With varying level of fluid the capacitance of these capacitors changes as the mixture of fluid to air is changing. Electrodes can be surrounded by 100% fluid, by a combination of air and fluid (i.e. party by air and partly by fluid) or 100% by air. Each first and second electrode has a defined capacitance. By having several first and second electrodes, extra functions are given. Depending on the material surrounding the first and second electrodes various diagnosis functions can be established. The capacitance is read out by the electronics of the sensor and used for further signal processing.
   ▪ AC voltage (impedance spectroscopy) can be used. Frequency can be changed and depending on the response frequency, which is changed due to media, different impedances are measured. Advantage: With these different impedances oil quality can be determined (different materials and different fluids e.g. water or dirt within the oil, show different impedance behavior). AC measurement is robust against external disturbances. Another benefit of the AC measurement is the possibility of the evaluation of phase-shifts between voltage and current. That provides more information about the fluid quality, density etc.
   ▪ DC measurement (e.g. CTMU-Charge Time Measurement) provides a low cost measurement. It is only depended of the charging of the electrodes (tube /electrodes on the PCB) and the dielectric in-between. Basically, it acts like a plate or cylindric capacitor charged with GND and +5V (for example). Material change of the oil (aging) e.g. quality or density cannot be detected as there is no fluid reference. Also DC measurement is less robust against external influences and disturbances.
   ▪ With a smart IC/ASIC selection both measurement methods can be provided. Both measurement methods could be used to verify each other or it might offer independent redundancy.
∘ Digital post-processing: Measuring more than one electrodes (several) provides an accuracy increase. Signal processing methods could be used to predict and correct measurement results.

Along the description, the term capacitance should be understood as referring to capacitance and/or impedance. In AC (alternating current) impedance are measured thus the term capacitance should be understood as impedance. In in DC (direct current) capacitances are measured, thus the term capacitance should be understood as capacitance.

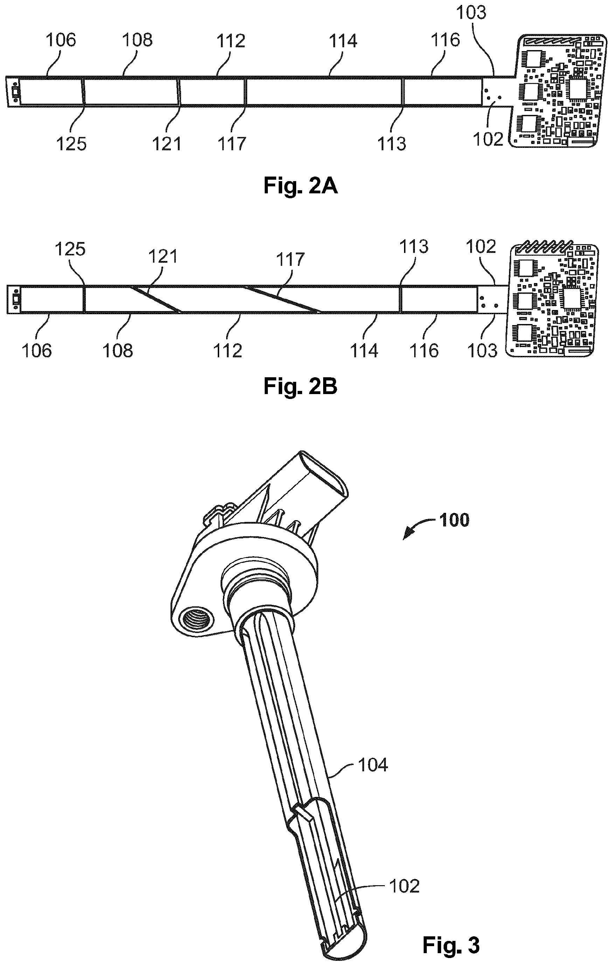

Figs 2A and 2B show a surface of the substrate, which can be a first surface 103 or a second surface 105 of the sensor device of Fig. 1. Figs 2A and 2B show an example of first electrodes 106, 108, 112, 114, 116 arranged on the first surface 103 (or the second surface). The plurality of first electrodes may be formed by one layer of metallization being segmented by removing parts of the metallization layer, thereby forming gaps 113, 117, 121, 125 between adjacent first electrodes.

Different segmentation style/shape of electrodes are shown in Fig. 2A and 2B. The first and second electrodes may have a trapezoid(al) shape having two parallel sides wherein the other two sides are also parallel forming a rectangular electrode as shown in Fig. 2A. The first and second electrodes may have a trapezoid(al) shape having two parallel sides wherein the other two sides are not parallel i.e. they are slanted or in other words angled, tilted or diagonal as shown in Fig. 2B, in which case the gaps between the electrodes are angled. The first and second electrodes may also have other shapes.

Fig. 2A and 2B only show one of the surfaces of the substrate, however the same applies to the other surface. If the electrodes of the first surface of the substrate have a slanted shape as shown in Fig. 2B, preferably the electrodes of the second surface also have a slanted shape. If electrodes on the first surface are rectangular (have a rectangular shape) as shown in Fig. 2A, preferably electrodes on the second surface are also rectangular.

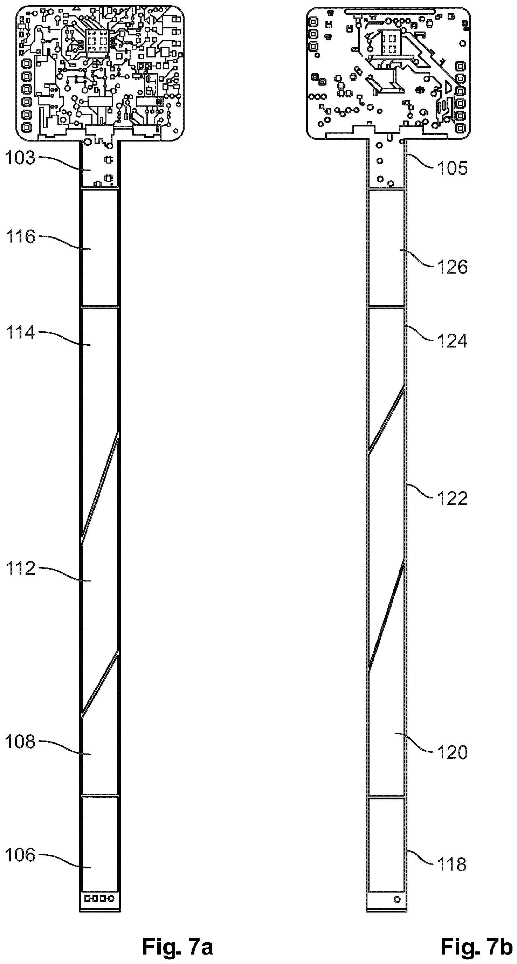

The angled (slated) gaps 121, 117 shown in Fig. 2B allow for redundant fluid level measurement along the axis between first electrodes 108 and 112 and between first electrodes 112 and 114, respectively and/or between first electrodes 112 and 114 and second electrodes 120 122 (Fig. 7b)

Fig. 3 shows an example of a sensor device of the present invention. It shows the electrically conductive housing 104 surrounding the printed circuit board 102.

Fig. 4 shows an example of configuration of five first electrodes 106, 108, 112 on the first surface 103 of the substrate 102 and seven second electrodes 118, 120, 122, 124 and 126 on the second surface 105 of the substrate 102. The number of the first electrodes is different from the number of second electrodes. The size of the first and second electrodes is also different from each other. By providing different numbers and sizes of the first and second electrodes different capacitances between the first and second electrodes and the electrically conductive tube can be measured, the combination of which can be used to obtain more accurate fluid level measurement and higher sensitivity. For example, the capacitance curves between the all the first electrodes (top layer electrodes) further including electrodes 129 and 132 and the electrically conductive housing may be summed up to provide Ctop. The capacitance curves between the all the second electrodes (bottom layer electrodes) further including electrodes 128 and 134 and the electrically conductive housing may be summed up to provide Cbottom. The measured capacitances can be used independently from each other to refine the total measurement result. The determined capacitances can also be summed up to provide total capacitance: Ctotal = Ctop + Cbottom which allows to achieve higher sensitivity.

The two electrodes 132,134 closest to the rear end may be used to extend the level capacitance/ impedance in cases when the oil level is high enough. They may be used for level measurement itself only in this case when the level is high enough. The effective level measurement range is from the gap 131, 133 closest to the rear end (oil reference) to the gap 117, 135 closest to the front end (electrodes in air). In other words, the two electrodes closest to the rear end are used for reference (diagnosis) and extension of the level measurement capacitance/impedance

The two electrodes 132,134 closest to the rear end may have a different size thus, there may be no gap 131 closest to the rear end on the first surface 103 overlapping with a gap 133 closest to the rear end on the second surface 105 (contrary to what it is shown in the figure). In such case the two electrodes 132,134 closest to the rear end are first and second electrodes i.e. complying with the requirement that a gap on the first surface 103 does not overlap with a gap on the second surface 105 such that there is no dead zones.

Fig. 4 shows a plurality of first electrodes arranged on the first surface each of which are separated from adjacent ones by a gap 125, 121, 117, and a plurality of second electrodes arranged on the second surface each of which are separated from the adjacent ones by a gap 127, 123, 119, 115, such that a gap on the first surface does not overlap with a gap on the second surface. In other words, there is no dead zone along the axis which is not cover by an electrode. In other words, the electrodes of the first surface (top layer) and second surface (bottom layer) of the substrate (PCB) are arranged so that such that gaps separating adjacent first electrodes on the first surface oppose metallization of the other second surface and gaps separating adjacent second electrodes on the second surface oppose metallization of the first surface. The gaps are arranged in a manner that in the opposing side there is metallization in the part where there is a gap. This arrangement has the effect that there is no dead zones or in other words, there is no part along the axis where the fluid level is not measured.

Fig. 4 shows electrodes 132 and 134 arranged opposing each other which may be used for reference capacitance in oil. Line 136 shows an example of a line of reference oil. Electrodes 129 and 128 closest to the front end may be used to measure air reference capacitance. However, any other of the first and second electrodes and/or electrodes 128, 129, 132, 134 may be used for level measurement or for reference capacitance depending on the fluid height. For example, electrodes 132 and 134 may be used as reference capacitance. If the fluid level is higher than 132 and 134 so that other electrodes are fully immersed into fluid, the electrodes immersed in the fluid may also be used as reference e.g. electrodes 106, 108 etc or 118, 120, 122 etc.

Fig. 4 shows that a first electrode placed on the central part of the first surface overlaps with three second electrodes placed on the central part of the second surface. Central part means placed in the middle part between the rear and front ends of the substrate.

Fig. 5 shows an example of first and second electrodes configuration in which a first electrode placed on the central part of the first surface does not overlap with a second electrode placed on the central part of the second surface.

Fig. 5 shows an example in which two identical electrodes 132 and 134 placed on the first and second surfaces respectively used for oil reference capacitance and two identical electrodes 129 and 128 placed on the first and second surfaces respectively used for air reference capacitance. However, depending on the fluid level, any other of the electrodes may be used for reference capacitance measurement or for level measurement.

Fig. 5 shows three first electrodes on the first surface and three second electrodes on the second surface, in other words the number of first and second electrodes is the same. In fig. 5 the first and second electrodes placed on the central parts of the first and second surfaces are smaller than the adjacent electrodes placed closer to the rear and front ends, in other words, the size of the first and second electrodes may vary.

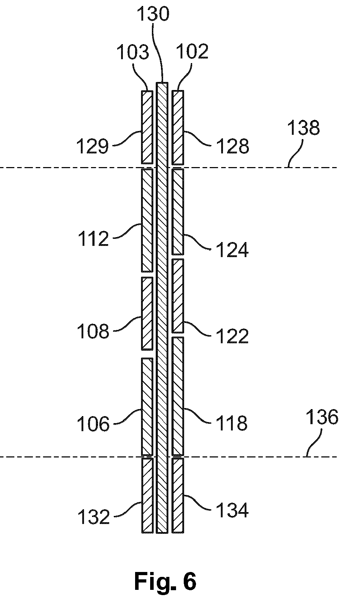

Fig. 6 shown an example in which all the first electrodes 106, 108, 112 and second electrodes 118, 122, 124 are of about same size and the first and second electrodes are arranged slightly shifted along the axis with respect to the first electrodes (in other words they first and second electrodes are mirrored). In this case the number of first electrodes is the same as the number of second electrodes i.e. three first electrodes and second electrodes.

In Fig. 1-6 the plurality of capacitances may be interconnected and evaluated in different methods. It is clear for a person skilled in the art how to measure the capacitance(s) or impedance(s). In AC impedance are measured while in DC capacitances are measured. The level of fluid material may be determined based on a capacitance between one or more of the plurality of first electrodes and the electrically conductive housing and a capacitance between one or more of the plurality of second electrodes and the electrically conductive housing.

In all the figures each of the electrodes is connected separately as one electrode of the capacitance.

Fig. 7A and 7B show examples of an arrangement of first and second electrodes where the gaps between adjacent electrodes is angled (slanted) which allows for redundant measurement. It also allows minimizing the impact of the gaps between the electrodes in other words minimizing the impact of the deadzone caused by the gaps between the electrodes.

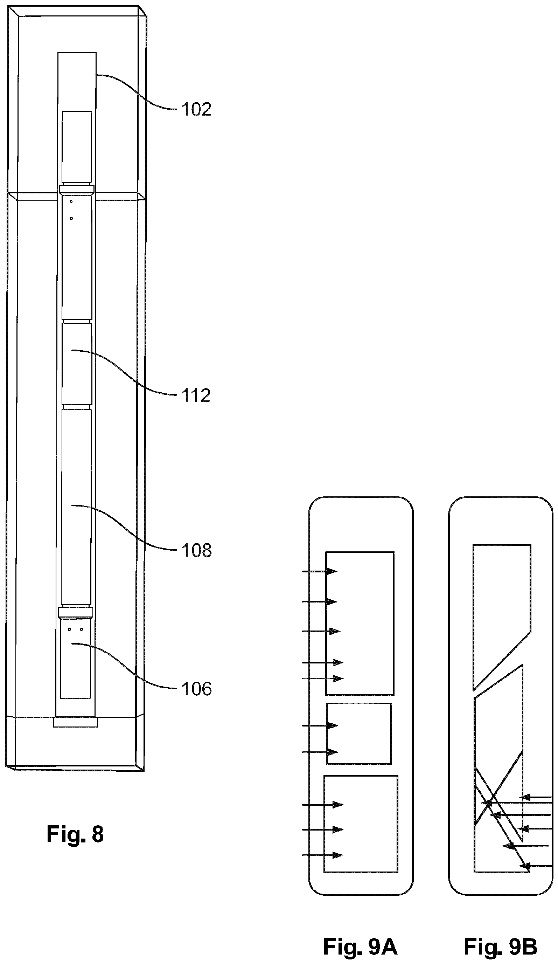

Fig. 8 shows a PCB with rectangular segmentation within an oil/fluid container having 100% of fluid level. In other words, the air electrode is within the air while all other (first and second) electrodes are fully immersed into the fluid and might be used for level or for reference. In the example of Fig. 8 except one electrode of each side (there is only one side/layer visible), all electrodes are inside the fluid. The two electrodes on top may measure the permittivity of air, the air permittivity value is needed for mathematics, reference in air to measure air permittivity.

Fig. 8 shows horizontal gaps. It shows the general principle regarding a problem with accuracy when the air/liquid interface is exactly at the gap. Slanted segments of Fig. 9 solve problems similar to the ones solved by the shifted/mirrored segments on top and bottom layers.

Fig. 9A shows a detail of rectangular electrodes with straight gaps between them. Fig. 9B shows a detail of an angled (slanted or diagonal) gaps between adjacent electrodes for redundant measurement.

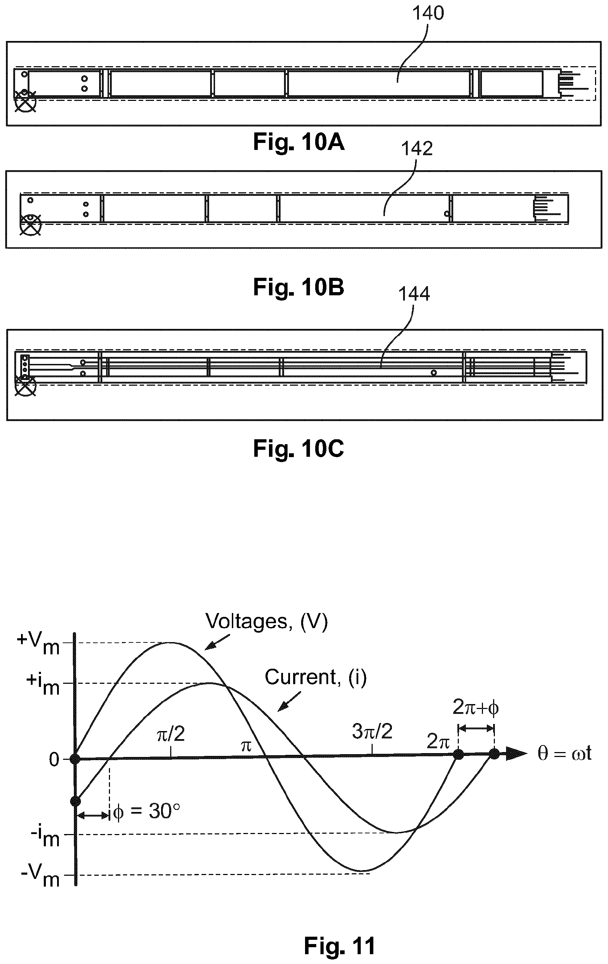

Figs 10A, 10B and 10C show different functional layers of the substrate (layered substrate) comprising a plurality of layers. Fig. 10A shows functional layers 1 and 6 i.e. Top + Bottom Layer, with small potential barriers. Small potential barriers may not be needed, if big ones can be used for measurement and as potential barrier.

Fig. 10B shows functional layers 2 and 5. They are shielding layers placed below the top-and bottom layers (below the first and second electrodes).

Fig. 10C shows layer 3+4 which are U-shielding Layers. Their function is to protect traces and also PCB from external fields, incoming on the side. Inner layers 3+4 shield against external influences from the side of the PCB.

The layers shown in figures 10A, 10B, 10C provide the possibility to shield the substrate (sensor) layers from each other and against incoming external influences from the outside environment. The electrode layout on each layer reduces parasitic capacitances of an electrode layout on each layer.

The capacitance of the shielding layers may be measured. The measured values may be used for reduction of parasitic capacitance within the PCB and improvement of accuracy by using their capacitance value in the level calculation. This leads to an enhanced precision and improved overall accuracy.

A substrate of the present invention may comprise six functional layers: a first layer 140 and a sixth layer 140 being a top layer and a bottom layer respectively (shown in Fig. 10A), the first layer 140 comprising the first surface with the first electrodes and the sixth layer 140 comprising the second surface with the second electrodes; a second and a fifth layers 142 (shown in Fig. 10B) consecutive to the first and sixth layer 140 respectively, which are shielding layers placed below the first and second electrodes respectively. A third and a fourth layer 144 (shown in Fig. 10C) arranged consecutive second and fifth layers 142 respectively, which are (U-) shielding layers to protect traces and the substrate (PCB) from external fields incoming on the side.

The first and sixth layers 140 may be mirrored, shifted or have different amount of electrodes are shown for example in figure 4. The first and sixth layers may be made of the same material and/or have the same thickness.

Layers (Layer 2+5) may be used for shielding the inside of the sensor. They can be measured, too. This reduces parasitic capacitances within the PCB and improve accuracy by using their capacitance value in the level calculation. This leads to an enhanced precision and improved overall accuracy.

Layer 1+6 i.e. top + bottom layer are layers preferably with small potential barriers. However, small potential barrier may not be needed if big ones can be used for measurement and as potential barrier. Layer 2+5 are used for shielding layers below the top-and bottom electrodes. Layer 3+4 may provide U- Shielding Layers. This allows to protect traces and also PCB from external fields, incoming on the side. From a geometrical point of view, layers 2+5 may be similar to each other or substantially the same. From a geometrical point of view, layers 3+4 may be similar to each other or substantially the same. Layers 2+5 are used for the same function and layers 3+4 are used for the same function.

Fig. 11 shows impedance spectroscopy and phase shift measurement for oil quality can be used. For example, the current of every capacitance may be measured. Impedance can be determined with a pulsed sine wave and varying frequency. The phase of the capacitance may be measured to determine oil quality and/or other possible properties, such as viscosity and density of oil.

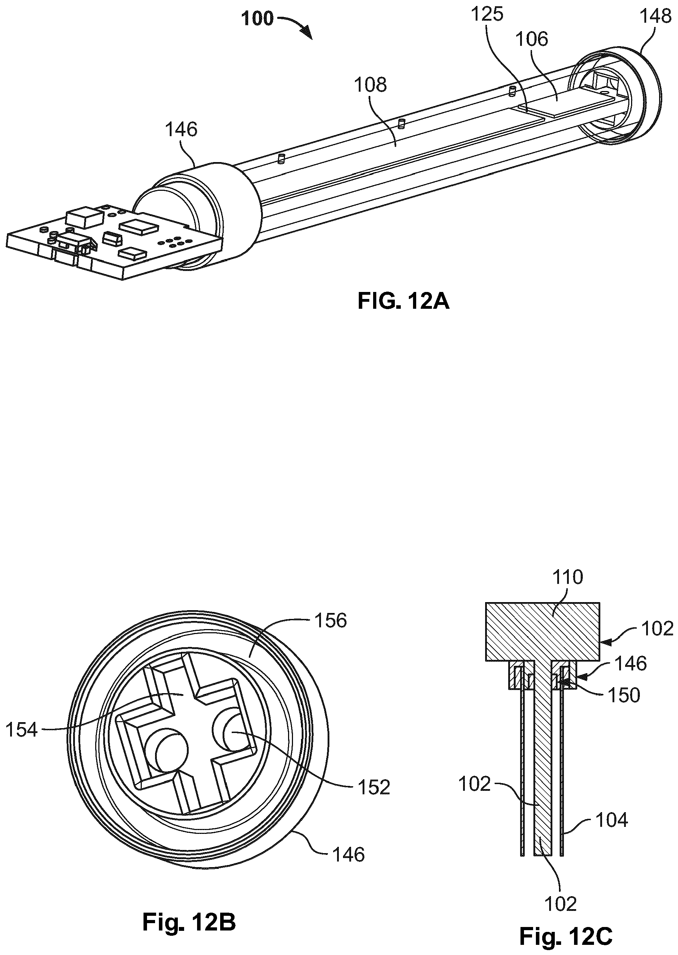

Fig 12A shows a sensor device 100 comprising a front cap 146 and a rear cap 148. Front and rear caps 146 and 148 may also be called spacers. The front cap 146 and the rear cap 148 have the function to keep the PCB (and so the electrodes on the PCB) on a fixed distance to the surrounding conductive tube i.e. keep capacitor plates at a fixed distance. This allows the capacity to be stable. Further the front and rear caps serve to close the front end and the rear end of the tube. The holes inside support oil flow outside in case of abrupt loss of oil. In other words, the tube may have holes for the oil to enter. If the oil in the tank falls low quickly, the oil need to get out of the tube also quickly, in order to show a measurement reflecting the loss of oil. The holes in the cap facilitate the outflow of the oil.

The sensor is mechanically more robust because the spacers support the PCB, in other words the spacers create ruggedness. As shown, the front cap is closer to the circuitry components of the sensor device.

The front end and rear-end caps may be 3D printed caps. This is particularly suitable for prototyping or small series production.

Fig 12B shows a detail of the rear cap 148 comprising two circular holes 152, a rectangular groove 154 and a ring-shaped groove 156. When the front cap is attached to the sensor device, the fluid can enter through the holes 152. Holes 152 have a circular cross section however, they may also have other shapes. Groove 154 (also referred as slot or slice) is for holding the substrate (PCB). The substrate comprising the first and second electrodes on its surfaces can be inserted through groove 154. In figure 12B groove 154 is rectangular however other shapes are possible provided it allows the substrate to be inserted and provided it allows to hold the substrate at a fixed distance from the housing. Ring shaped groove 156 is for holding the housing e.g. for holding the stainless steel tube. With this arrangement the substrate (PCB) is not in contact with a tank. The substrate is in contact with the liquid via holes 152 and via through-holes in the tube along the axis shown in Figs. 12B, 13 and 14.

Fig. 12C shows only the part of the sensor device proximal to its front-end. It does not shown the part of the sensor proximal to the rear-end of the sensor. It shows an electronics area 110 of the PCB having rectangular shape. It shows a cross section of a 3D printed front cap 146 holding the substrate (PCB). Epoxy potting 150 to seal the electronic part of the PCB (inside the tube and in-between tube and PCB) is shown. It also shown stainless steel tube 104 (electrically conductive housing). The whole PCB may be coated and the housing may act as the sealing part against the oil. Potting 150 may comprise different material.

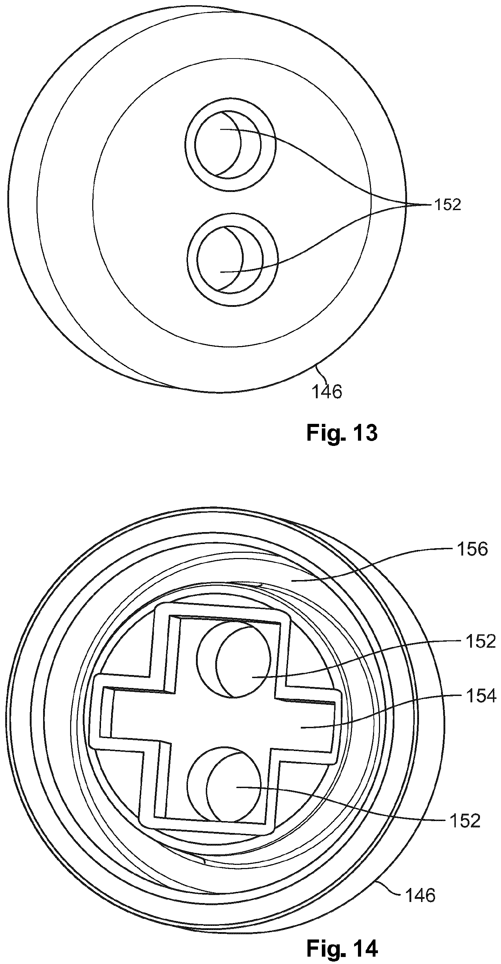

Fig. 13 shows a perspective top view of the rear cap 148 of Figs. 12A and 12B. It shows the two circular holes 152 through which the fluid enters.

Fig. 14 shows a perspective view from inside of the rear cap 148 of Figs. 12A-12B. It shows groove 154 for holding the substrate and the ring shaped groove 156 for the holding the housing (tube).

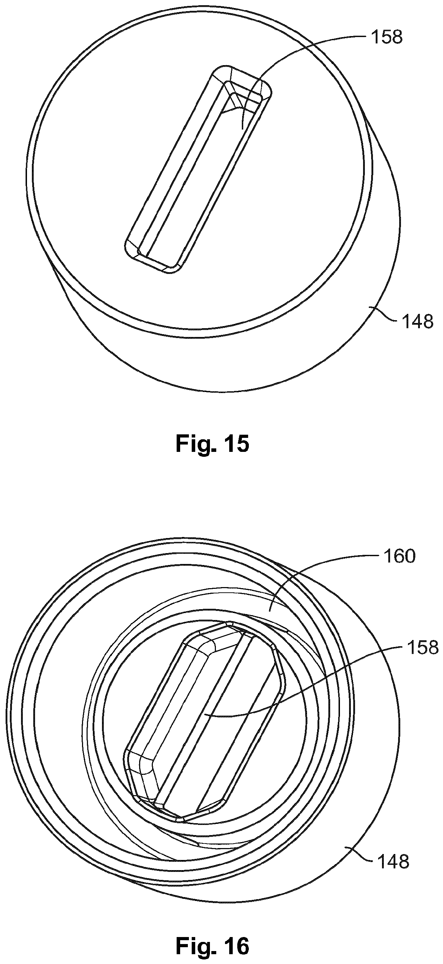

Fig. 15 shows a perspective top view of the front cap 146 of Fig. 12A. It shows a rectangular groove 158 for holding the substrate (PCB) at a fixed distance from the housing. The shape of groove 158 is based on the shape of the substrate as in the case of groove 154

Fig. 16 shows a perspective view from inside of the front cap 146 of Fig. 12A. It shows an inside view of groove 158 for holding the substrate and ring-shaped groove 160 for holding the housing (stainless steel tube).

A manufacturing method including the (plastic) front cap and rear cap (spacers) may comprise the following steps: establishing a Tube-PCB connection to charge the PCB by means of for example welding, soldering (with having slices inside), pressing with hooks (direct plugin) or any other reliable manufacturing method. With these methods the charging of the PCB and also the connection to the electronics is established. Sealing of the charging connection from the PCB and the tube and sealing of PCB and tube. The tube gets mechanical support from the housing but only the connection for potential charging is needed to be sealed. The tube - electronics connection may be established by a hard connection between a track within the PCB or an electrode on top of the PCB and the tube itself (might be clamped etc.). In this case there is no extra sealing needed. This allows to avoid leakage problems in fluid applications. Especially it allows to avoid problems related to oil being a very aggresse material, which causes material creep (Kriechverhalten) and toxic fumes (fuel vapors), which accelerate aging of electronic component and their soldering points. It avoids that the penetration of the tube through the housing causes leakage, which improves established sealing methods.

**REFERENCE NUMERALS**

| **Reference Numeral** | **Description** |
|---|---|
| 100 | Sensor device |
| 102 | Substrate (PCB) |
| 103 | First surface |
| 104 | Electrically conductive hollow housing |
| 105 | Second surface |
| 106 | First electrode |
| 107 | Rear end of sensor |
| 108 | First electrode |
| 109 | Front end of sensor |
| 110 | Electronics area |
| 111 | Gap |
| 112 | First electrode |
| 113 | Gap |
| 114 | First electrode |
| 115 | Gap |
| 116 | First electrode |
| 117 | Gap |
| 118 | Second electrode |
| 119 | Gap |
| 120 | Second electrode |
| 121 | Gap |
| 122 | Second electrode |
| 123 | Gap |
| 124 | Second electrode |
| 125 | Gap |
| 126 | Second electrode |
| 127 | Gap |
| 130 | Axis |
| 128,129, 134, 132 | Electrode |
| 131, 133, 117, 135 | Gap |
| 136, 138 | Example of reference oil and reference air level |
| 139 | Gap for redundant capacitance measurement |
| 140 | First layer of substrate, sixth layer of substrate |
| 142 | Second layer of substrate, fifth layer of substrate |
| 144 | Third layer of substrate, fourth layer of substrate |
| 146 | Front cap (spacer) |
| 148 | Rear cap (spacer) |
| 150 | Potting |
| 152 | Hole of front cap |
| 154 | Groove on front cap for holding the substrate |
| 156 | Groove on front cap for holding the housing |
| 158 | Groove on rear cap for holding the substrate |
| 160 | Groove on rear cap for holding the housing |

## Claims

1. A sensor device (100) for determining a level of a fluid material along an axis (130) of a container, the sensor device (100) comprising:
a substrate (102) having a first surface (103) and a second surface (105), adapted to be placed in the container along the axis (130) such that the first and second surfaces (103, 105) extend along the axis (130);
at least one first electrode (106, 108, 112, 114, 116) placed on the first surface (103) of the substrate (102);
an electrically conductive hollow housing (104) surrounding the substrate (102), adapted to be capacitively coupled to the first electrode (106, 108, 112, 114, 116) as a counter electrode (104) of the at least one first electrode (106, 108, 112, 114, 116);
wherein the sensor device (100) is operable to determine the level of fluid material based on a capacitance between the at least one first electrode (106, 108, 112, 114, 116) and the electrically conductive housing (104).

2. Sensor device (100) according to claim 1, wherein the hollow electrically conductive housing comprises a conductive tube, a pipe or an electrically insulating body with an electrically conductive coating.

3. Sensor device (100) according to any of claims 1-2 wherein at least one second electrode (118, 120, 122, 124, 126) is arranged on the second surface (105) of the substrate (102) at least partially overlapping along the axis (130) with at least one of the at least one first electrode (106, 108, 112, 114, 116), wherein the sensor device (100) is operable to determine the level of fluid material based on a capacitance between the at least one second electrode (118, 120, 122, 124, 126) and the electrically conductive housing.

4. Sensor device (100) according to any of claims 1-3 comprising
a plurality of first electrodes (106, 108, 112, 114, 116) arranged on the first surface (103) each of which are separated from adjacent ones by a gap; and
a plurality of second electrodes (118, 120, 122, 124, 126) arranged on the second surface (105) each of which are separated from the adjacent ones by a gap;
wherein a gap on the first surface (103) does not overlap with a gap on the second surface (105) such that all positions of the substrate along the axis are covered by a first electrode and/or by a second electrode; and
wherein the sensor device is operable to determine the level of fluid material based on a capacitance between one or more of the plurality of first electrodes (106, 108, 112, 114, 116) and the electrically conductive housing and/or a capacitance between one or more of the plurality of second electrodes (118, 120, 122, 124, 126) and the electrically conductive housing.

5. Sensor device (100) according to any of claims 1-4 wherein each of the electrodes are connected separately as one electrode of the capacitance, the electrically conductive hollow housing (104) being the counter electrode).

6. Sensor device (100) according to any of claims 1-5 wherein at least one of the plurality of first and/or second electrodes (106, 108, 112, 114, 116, 118, 120, 122, 124, 126) on each side of the substrate (102) is operable to be used as reference capacitance.

7. Sensor device (100) according to any of claims 1-6 wherein the substrate (102) is a layered substrate (102) comprising one or more functional layers.

8. Sensor device (100) according to claim 7 wherein the substrate (102) comprises six functional layers:
a first and a sixth layers being a top layer and a bottom layer respectively, the first layer (140) comprising the first surface with the first electrodes (106, 108, 112, 114, 116) and the sixth layer (140) comprising the second surface with the second electrodes (118, 120, 122, 124, 126);
a second and a fifth layers (142) consecutive to the first and sixth layer (140) respectively, which are shielding layers placed below the first and second electrodes (118, 120, 122, 124, 126) respectively;
a third and a fourth layer (144) arranged consecutive second and fifth layers respectively which are (U-)shielding layers to protect traces and the substrate (102) from external fields incoming on the side.

9. Sensor device (100) according to any of claims 1-8 wherein the electrodes are covered with a protective coating.

10. A method of manufacturing a sensor device (100) according to any of the preceding claims 1-9, the method comprising the steps of:
arranging a substrate (102) having a first surface (103) and a second surface (105), placing at least one first electrode (106, 108, 112, 114, 116) on the first surface (103) of the substrate (102) and arranging the electrically conductive hollow housing surrounding the substrate (102);
interconnecting the at least one first electrode (106, 108, 112, 114, 116) and the housing so that the sensor device (100) is operable to determine the level of fluid material based on a capacitance between the at least one first electrode (106, 108, 112, 114, 116) and the electrically conductive housing.

11. Method of manufacturing a sensor device (100) according to claim 10 further comprising the steps of:
placing at least one second electrode (118, 120, 122, 124, 126) on the second surface (105) of the substrate (102) at least partially overlapping along the axis (130) with at least one of the at least one first electrode (106, 108, 112, 114, 116), such that the sensor device (100) is operable to determine the level of fluid material based on a capacitance between the at least one second electrode (118, 120, 122, 124, 126) and the electrically conductive housing;
placing a plurality of further first electrodes (106, 108, 112, 114, 116) on the first surface (103) each of which separated from adjacent ones by a gap; and
placing a plurality of further second electrodes (118, 120, 122, 124, 126) on the second surface (105) each of which separated from the adjacent ones by a gap;
wherein a gap on the first surface (103) does not overlap with a gap on the second surface (105) such that all positions of the substrate along the axis are covered by a first electrode and/or by a second electrode;
wherein the sensor device (100) is operable to determine the level of fluid material based on a capacitance between one or more of the plurality of first electrodes (106, 108, 112, 114, 116) and the electrically conductive housing and a capacitance between one or more of the plurality of second electrodes (118, 120, 122, 124, 126) and the electrically conductive housing.

12. Method of manufacturing a sensor device (100) according to any of claims 10 or 11, further comprising the step of arranging at least one further functional layer on the substrate for determining a capacitance of the one or more functional layers for calibration.

13. Method of manufacturing a sensor device (100) according to any of claims 10 to 12 comprising the step of providing at least one spacer to keep the first and second electrodes arranged on the substrate at a fixed distance from the electrically conductive housing.

14. A method of determining a level of a fluid material in a container using the sensor device (100) according to any of claims 1-9 comprising the step of:
arranging the sensor device (100) inside the container, so that fluid material inside the contain can enter the housing and partly fill a space between the at least one first electrode (106, 108, 112, 114, 116) and the housing;
measuring the capacitance between at least one of the first electrodes (106, 108, 112, 114, 116) and the hollow electrically conductive housing and/or the capacitance between at least one of the second electrodes (118, 120, 122, 124, 126) and the hollow electrically conductive housing which varies according to the level of the fluid material.

15. Method of determining a level of a fluid material according to claim 14 further comprising the step of measuring a capacitance value of at least one functional layer for calibration and performing calibration based on the capacitance value.
